# FASCICULE DE BREVET EUROPEEN

(11) **EP 2 931 098 B1**
(45) Date de publication et mention de la délivrance du brevet: **16.05.2018**
(21) Numéro de dépôt: 13818287.8
(22) Date de dépôt: 10.12.2013
(51) Int. Cl.: A47J 43/07

(54) **APPAREIL ELECTROMENAGER COMPORTANT UN COUVERCLE INTERNE D'ETANCHEITE**
ELEKTRISCHE HAUSHALTSVORRICHTUNG MIT EINEM INNEREN VERSCHLUSSDECKEL
HOUSEHOLD ELECTRICAL APPLIANCE COMPRISING AN INNER SEALING LID

(30) Priorité: 14.12.2012 FR 1262108
(43) Date de publication de la demande: 21.10.2015
(73) Titulaire: SEB S.A., 69130 Ecully (FR)
(72) Inventeur: BOURGEOIS-JACQUET, Jean-Marie, F-21850 Saint-Apollinaire (FR); FERRER, Florent, F-65310 Laloubere (FR); PERE-SARRAILHE, Sabine, F-64460 Bentayou-Seree (FR)
(74) Mandataire: Cémeli, Eric Philippe Laurent
(86) Numéro de dépôt international: PCT/FR2013/053020
(87) Numéro de publication internationale: WO 2014/091145

(56) Documents cités:
- EP-A1- 0 004 987
- EP-A1- 2 368 470
- FR-A1- 2 340 707
- KR-A- 20080 025 634

## Description

La présente invention concerne le domaine technique des appareils électroménagers pour réaliser des préparations alimentaires et/ou cosmétiques, comprenant un couvercle externe pour commander le fonctionnement de l'appareil et un récipient de travail recevant un outil de travail rotatif.

La présente invention concerne plus particulièrement les appareils du type précité dans lesquels le récipient de travail est au moins partiellement obturé par un couvercle interne.

Le document EP 2 368 470 divulgue un appareil électroménager du type précité, dans lequel le récipient de travail est partiellement obturé par un opercule. Le couvercle externe de l'appareil comporte une surface venant prendre appui sur l'opercule lorsque le couvercle est en position abaissée. Toutefois l'opercule est maintenu par déformation élastique sur le récipient de travail. Une telle réalisation permet d'obtenir une étanchéité satisfaisante entre le récipient de travail et l'opercule, mais présente l'inconvénient de nécessiter une mise en place précise de l'opercule sur le récipient de travail.

Un objet de la présente invention est de simplifier l'utilisation d'un appareil électroménager pour réaliser des préparations alimentaires et/ou cosmétiques comportant un couvercle externe pour commander le fonctionnement de l'appareil.

Un autre objet de la présente invention est de proposer un appareil électroménager pour réaliser des préparations alimentaires et/ou cosmétiques comportant un couvercle externe pour commander le fonctionnement de l'appareil, dans lequel l'enceinte de travail présente une étanchéité satisfaisante.

Ces objets sont atteints avec un appareil électroménager pour réaliser des préparations alimentaires et/ou cosmétiques, comportant un boîtier supportant un récipient de travail recevant un outil de travail rotatif, ainsi qu'un couvercle interne d'étanchéité amovible disposé sur le récipient de travail et un couvercle externe amovible monté sur le boîtier, le boîtier renfermant un moteur pour l'entraînement de l'outil de travail rotatif, le couvercle externe étant mobile sur le boîtier contre au moins un élément de rappel élastique entre une position de repos relevée dans laquelle le moteur est à l'arrêt et une position de commande abaissée dans laquelle le moteur est en fonctionnement, du fait que le couvercle externe déplacé vers le boîtier presse le couvercle interne contre le récipient de travail à partir d'une position d'étanchéité intermédiaire entre la position de repos relevée et la position de commande abaissée, dans laquelle le moteur n'est pas encore en fonctionnement. Lors du fonctionnement de l'appareil, le mouvement de l'outil de travail rotatif tend à créer une surpression. La pression exercée par le couvercle externe sur le couvercle interne permet de confiner les ingrédients à l'intérieur de l'enceinte de travail formée par le récipient de travail et le couvercle interne avant la mise en rotation de l'outil de travail rotatif. Par ailleurs, cette pression est simplement obtenue lors de la commande de l'appareil, et ne nécessite aucune action supplémentaire de la part de l'utilisateur.

Avantageusement, le couvercle interne repose sur une paroi interne supérieure évasée du récipient de travail au moins lorsque le couvercle externe presse le couvercle interne contre le récipient de travail. Cette disposition facilite le positionnement du couvercle interne et améliore l'étanchéité de l'enceinte de travail.

Avantageusement encore, le couvercle interne comprend un joint annulaire d'étanchéité prenant appui contre le récipient de travail. Cette disposition permet d'améliorer l'étanchéité de l'enceinte de travail.

Selon une forme de réalisation avantageuse, le joint annulaire d'étanchéité est un joint à lèvre. D'autres types de joint annulaire d'étanchéité peuvent toutefois être envisagés, notamment un joint en O.

Avantageusement encore, un élément déformable est interposé entre le couvercle externe et le couvercle interne. Cet élément déformable peut être utilisé en alternative ou en complément du joint annulaire d'étanchéité. Cet élément déformable permet d'assurer un appui sur le couvercle interne tout en autorisant la poursuite du déplacement du couvercle externe vers le boîtier.

Avantageusement alors, l'élément déformable est agencé en position centrale. Cette disposition permet de mieux répartir les efforts exercés par le couvercle externe sur le couvercle interne.

Selon une forme de réalisation avantageuse, l'élément déformable est réalisé en élastomère. Toutefois un élément déformable comportant au moins une pièce élastiquement déformable associée si désiré à une ou plusieurs pièces plus rigides peut également être envisagé.

Avantageusement encore, l'élément déformable est monté sur le couvercle interne. Cette disposition permet de simplifier la réalisation du couvercle externe.

Avantageusement alors, l'élément déformable forme un organe de préhension pour le couvercle interne. Cette disposition permet de faciliter l'utilisation de l'appareil.

Avantageusement encore, l'élément déformable est solidaire d'un élément intermédiaire assemblé de manière démontable avec le couvercle interne. Cette disposition permet de faciliter la réalisation d'un élément déformable amovible du couvercle interne.

Avantageusement alors, le couvercle interne présente au moins une perforation primaire. Ainsi le volume interne du récipient de travail obturé par le couvercle interne est mis en communication avec l'extérieur, ce qui facilite une bonne fermeture de l'enceinte de travail lors de l'appui sur le couvercle externe.

Avantageusement alors, l'élément déformable présente au moins une perforation secondaire reliée à la ou au moins l'une des perforations primaires par un conduit ménagé dans l'élément intermédiaire. Cette disposition permet notamment d'agencer la ou les perforations primaires à distance de la périphérie du couvercle interne, de ce fait les perforations primaires sont moins exposées aux projections générées par l'outil de travail rotatif lors du fonctionnement de l'appareil. L'utilisateur peut démonter l'élément intermédiaire pour nettoyer le conduit.

Selon une forme de réalisation avantageuse, le couvercle externe comporte au moins un tenon interne pour commander le fonctionnement du moteur lorsque le couvercle externe coiffe le récipient de travail. Cette disposition permet d'obtenir un verrouillage du couvercle externe sur le boîtier.

Selon une forme de réalisation avantageuse facilitant la commande de l'appareil, le couvercle externe présente au moins trois tenons internes, et de préférence trois tenons internes. Une telle disposition permet en effet d'obtenir un couvercle externe dont les tenons internes sont portés par le boîtier de l'appareil.

Avantageusement encore, le couvercle externe en position de repos repose sur une couronne agencée dans le boîtier, la couronne est montée mobile contre ledit élément de rappel élastique, et une pression verticale exercée manuellement sur le couvercle externe déplace la couronne pour actionner un interrupteur et commander la mise en marche du moteur. Cette disposition facilite l'obtention d'un déplacement en translation du couvercle externe.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager pour réaliser des préparations alimentaires et/ou cosmétiques selon l'invention,
- la figure 2 est une vue en élévation et en coupe de l'appareil électroménager pour réaliser des préparations alimentaires et/ou cosmétiques illustré sur la figure 1,
- la figure 3 est une vue en perspective et en position retournée d'un couvercle externe de l'appareil illustré sur les figures 1 et 2,
- la figure 4 est une vue en élévation et en coupe d'un couvercle interne de l'appareil illustré sur les figures 1 et 2.

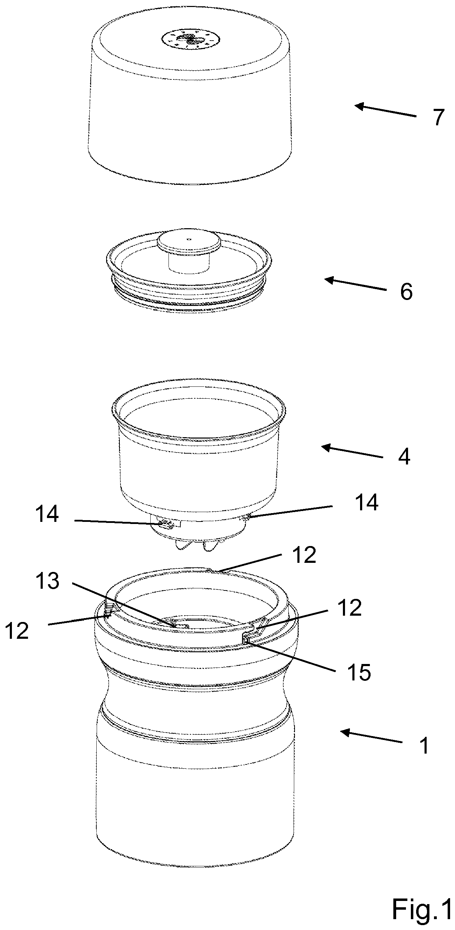

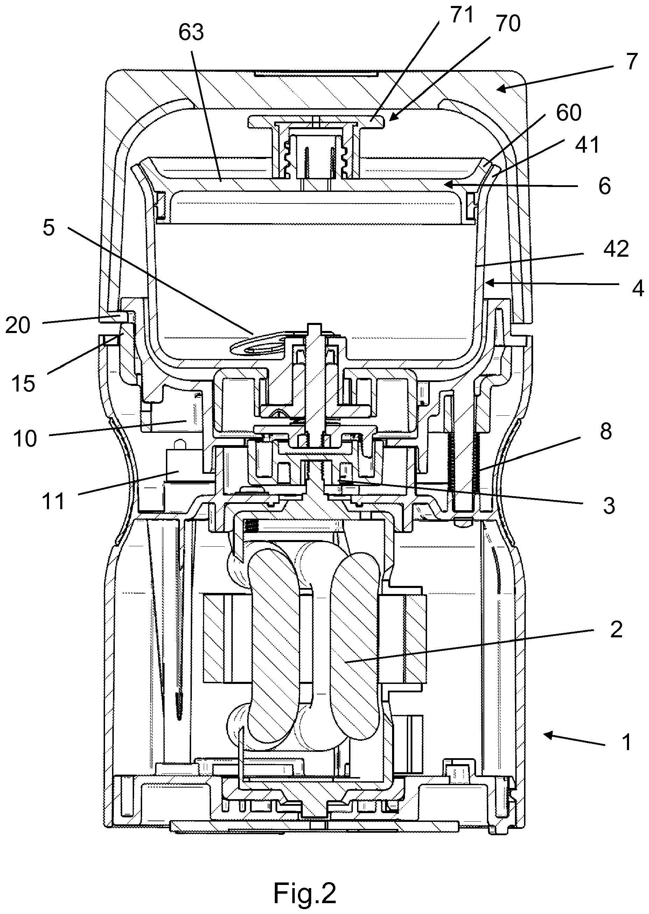

L'appareil électroménager pour réaliser des préparations alimentaires et/ou cosmétiques illustré sur les figures 1 et 2 comporte un boîtier 1 supportant un récipient de travail 4 recevant un outil de travail rotatif 5, ainsi qu'un couvercle interne 6 d'étanchéité amovible disposé sur le récipient de travail 4 et un couvercle externe 7 amovible monté sur le boîtier 1. Le boîtier 1 renferme un moteur 2 pour l'entraînement de l'outil de travail rotatif 5. Le couvercle externe 7 est mobile sur le boîtier 1 contre au moins un élément de rappel élastique 8 entre une position de repos relevée dans laquelle le moteur 2 est à l'arrêt et une position de commande abaissée dans laquelle le moteur 2 est en fonctionnement.

Plus particulièrement dans l'exemple de réalisation illustré sur les figures, le récipient de travail 4 est amovible par rapport au boîtier 1. Le récipient de travail 4 est verrouillé par baïonnette sur le boîtier 1 au moyen de tenons externes 14 engagés dans des encoches internes 13 du boîtier 1. L'outil de travail rotatif 5 est solidaire du récipient de travail 4. Le boîtier 1 présente un organe d'entraînement supérieur 3 pour entraîner l'outil de travail rotatif 5.

Le couvercle externe 7 comporte au moins un tenon interne 20 pour commander le fonctionnement du moteur 2 lorsque le couvercle externe 7 coiffe le récipient de travail 4, tel que visible sur la figure 2.

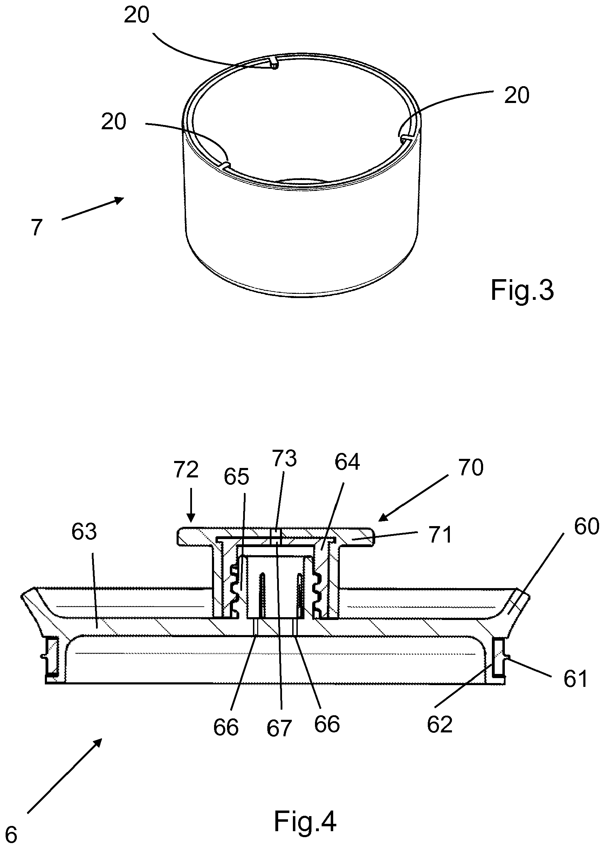

Dans l'exemple de réalisation illustré sur les figures, le couvercle externe 7 présente une géométrie de révolution et comporte trois tenons internes 20 agencés à 120° les uns des autres, tel que visible sur la figure 3. Les tenons internes 20 peuvent être engagés dans des encoches externes 12 du boîtier 1, pour verrouiller le couvercle externe 7 par baïonnette sur le boîtier 1 après un mouvement de rotation. Les tenons internes 20 engagés au fond des encoches externes 12 reposent sur des organes de commande 15.

Le couvercle externe 7 est mobile sur le boîtier 1 entre une position de repos, dans laquelle le moteur 2 est à l'arrêt, et une position de commande, dans laquelle le moteur 2 est en fonctionnement.

Dans l'exemple de réalisation illustré sur les figures, la position de repos du couvercle externe 7 est une position relevée et la position de commande du couvercle externe 7 est une position abaissée. Tel que visible sur la figure 2, le couvercle externe 7 en position de repos s'étend à distance du couvercle interne 6. Les organes de commande 15 sont mobiles verticalement par rapport au boîtier 1 et appartiennent à une couronne 10 agencée dans le boîtier 1. Ainsi le couvercle externe 7 en position de repos repose sur la couronne 10. La couronne 10 est montée mobile contre au moins un élément de rappel élastique 8 et peut être déplacée par appui sur le couvercle externe 7 pour actionner un interrupteur 11 commandant la mise en marche du moteur 2. Le boîtier 1 comporte ainsi au moins un élément de rappel élastique 8 pour écarter le couvercle externe 7 de la position de commande. La couronne 10 est avantageusement portée par trois éléments de rappel élastiques 8.

Dans l'exemple de réalisation illustré sur les figures, le récipient de travail 4 comporte une paroi interne supérieure évasée 41 et le couvercle interne 6 présente une bordure périphérique relevée 60, tel que mieux visible sur la figure 4. Le couvercle interne 6 comprend un joint annulaire d'étanchéité 61 monté dans une gorge externe 62 d'un corps principal d'obturation 63 du couvercle interne 6. Le joint annulaire d'étanchéité 61 peut venir en appui annulaire contre une paroi latérale interne 42 du récipient de travail 4. Le joint annulaire d'étanchéité 61 est par exemple réalisé en matériau élastomère. Si désiré, le joint annulaire d'étanchéité 61 peut être démontable du corps principal d'obturation 63. Plus particulièrement dans l'exemple de réalisation illustré sur les figures, le joint annulaire d'étanchéité 61 est un joint à lèvre.

Un élément déformable 70 est interposé entre le couvercle externe 7 et le couvercle interne 6. Plus particulièrement dans l'exemple de réalisation illustré sur les figures, l'élément déformable 70 est monté sur le couvercle interne 6. L'élément déformable 70 est agencé en position centrale par rapport au couvercle interne 6. L'élément déformable 70 comporte une collerette 71 s'étendant au dessus du corps principal d'obturation 63 du couvercle interne 6. L'élément déformable 70 forme un organe de préhension 72 pour le couvercle interne 6.

Dans le mode de réalisation illustré sur les figures, l'élément déformable 70 est réalisé en élastomère, par exemple en élastomère thermoplastique (TPE). L'élément déformable 70 est solidaire d'un élément intermédiaire 64 assemblé de manière démontable avec le couvercle interne 6. L'élément déformable 70 est par exemple surmoulé sur l'élément intermédiaire 64. Tel que visible sur la figure 4, l'élément intermédiaire 64 est vissé sur le couvercle interne 6, plus particulièrement sur un montant 65 issu du corps principal d'obturation 63 du couvercle interne 6. L'élément intermédiaire 64 est avantageusement réalisé en matière plastique, notamment en ABS. En alternative, l'élément intermédiaire 64 pourrait notamment être assemblé par baïonnette avec le couvercle interne 6.

Le couvercle interne 6 présente au moins une perforation primaire 66 pour éviter les surpressions à l'intérieur de l'enceinte de travail formée par le récipient de travail 4 et le couvercle interne 6. La ou les perforations primaires 66 traversent le corps principal d'obturation 63 et sont de préférence agencées en position centrale pour éviter les projections générées par l'outil de travail rotatif 5. Tel que visible sur la figure 4, le couvercle interne 6 présente deux perforations primaires 66. L'élément déformable 70 présente une perforation secondaire 73 reliée aux perforations primaires 66 par un conduit 67 ménagé dans l'élément intermédiaire 64.

Le fonctionnement de la présente invention est le suivant.

L'utilisateur met en place le récipient de travail 4 sur le boîtier 1, ajoute les ingrédients, ferme le récipient de travail 4 avec le couvercle interne 6, et positionne le couvercle externe 7 pour coiffer le récipient de travail 4. Le couvercle externe 7 en position de repos repose sur la couronne 10 agencée dans le boîtier 1. Le joint annulaire d'étanchéité 61 du couvercle interne 6 prend appui contre le récipient de travail 4, plus particulièrement contre la paroi latérale interne 42 du récipient de travail 4. Tel que représenté sur la figure 2, la bordure périphérique relevée 60 du couvercle interne 6 n'est alors pas nécessairement en appui sur la paroi interne supérieure évasée 41.

L'utilisateur peut alors exercer une pression verticale sur le couvercle externe 7 pour mettre en marche l'appareil. Le couvercle externe 7 déplacé vers le boîtier 1 presse le couvercle interne 6 contre le récipient de travail 4 à partir d'une position d'étanchéité intermédiaire entre la position de repos relevée et la position de commande abaissée, dans laquelle le moteur 2 n'est pas encore en fonctionnement.

En d'autres termes, la position d'étanchéité du couvercle 7 est une position intermédiaire entre la position de repos relevée du couvercle 7 et la position de commande abaissée du couvercle 7. Dans la position d'étanchéité du couvercle 7, le moteur 2 n'est pas encore en fonctionnement. Dans la position d'étanchéité du couvercle 7, le couvercle externe 7 presse le couvercle interne 6 contre le récipient de travail 4. L'enceinte de travail interne formée par le récipient de travail 4 et le couvercle interne 6 devient étanche du fait de la pression exercée par le couvercle externe 7 sur le couvercle interne 6 fermant le récipient de travail 4. De plus l'enceinte interne formée par le récipient de travail 4 et le couvercle interne 6 reste étanche lorsque le couvercle externe 7 est déplacé vers le boîtier 1 pour attendre la position de commande abaissée.

Le joint annulaire d'étanchéité 61 peut glisser contre la paroi latérale interne 42 du récipient de travail 4. Le couvercle interne 6 repose sur la paroi interne supérieure évasée 41 du récipient de travail 4 au moins lorsque le couvercle externe 7 presse le couvercle interne 6 contre le récipient de travail 4. Ainsi la bordure périphérique relevée 60 du couvercle interne 6 peut reposer sur la paroi interne supérieure évasée 41 du récipient de travail 4. La pression verticale exercée manuellement sur le couvercle externe 7 déplace ensuite la couronne 10 pour actionner l'interrupteur 11 et commander la mise en marche du moteur 2. Si désiré, l'utilisateur peut réaliser plusieurs commandes par impulsion, en fonction de la texture désirée. L'utilisateur retire ensuite le couvercle externe 7 et le couvercle interne 6 d'étanchéité pour utiliser la préparation obtenue. Si désiré, l'utilisateur peut démonter l'élément déformable 70 porté par l'élément intermédiaire 64 pour nettoyer complètement le couvercle interne 6.

Ainsi le couvercle interne 6 peut être simplement posé sur le récipient de travail 4 sans réaliser une étanchéité entre le couvercle interne 6 et le récipient de travail 4. L'étanchéité entre le couvercle interne 6 et le récipient de travail 4 est obtenue par le déplacement du couvercle externe 7 effectué pour mettre en fonctionnement l'appareil. Toutefois l'étanchéité entre le couvercle interne 6 et le récipient de travail 4 intervient avant la mise en marche du moteur 2 commandée par le couvercle externe 7 atteignant la position de commande, dans laquelle le couvercle externe 7 actionne l'interrupteur 11 par l'intermédiaire de la couronne 10. L'utilisation de l'appareil est particulièrement simple et ergonomique, tout en offrant une bonne étanchéité entre le couvercle interne 6 et le récipient de travail 4.

A titre de variante, le joint annulaire d'étanchéité 61 pourrait notamment être un joint creux en O.

A titre de variante, le couvercle interne 6 ne porte pas nécessairement un joint annulaire d'étanchéité 61, le déplacement du couvercle externe 7 vers le boîtier 1 pouvant alors être absorbé par l'élément déformable 70.

A titre de variante, l'élément déformable 70 peut présenter au moins une perforation secondaire 73 reliée à la ou au moins l'une des perforations primaires 66 par le conduit 67 ménagé dans l'élément intermédiaire 64.

A titre de variante, l'élément déformable 70 n'est pas nécessairement réalisé en élastomère. L'élément déformable 70 peut notamment comporter au moins une pièce élastiquement déformable associée si désiré à une ou plusieurs pièces plus rigides.

A titre de variante, l'élément déformable 70 pourrait être monté sous le couvercle externe 7.

A titre de variante, l'appareil ne comporte pas nécessairement un élément déformable 70, le déplacement du couvercle externe 7 vers le boîtier 1 pouvant alors être absorbé par le joint annulaire d'étanchéité 61.

A titre de variante, le récipient de travail 4 n'est pas nécessairement monté amovible sur le boîtier 1.

A titre de variante, les tenons internes 20 du couvercle externe 7 ne sont pas nécessairement agencés au niveau d'une bordure inférieure du couvercle externe 7.

A titre de variante, le couvercle externe 7 peut comporter au moins un tenon interne 20, et de préférence entre trois et six tenons internes 20.

A titre de variante, le couvercle externe 7 ne comporte pas nécessairement au moins un tenon interne 20 pour commander le fonctionnement du moteur 2 lorsque le couvercle externe 7 coiffe le récipient de travail 4. Le couvercle externe 7 peut notamment comporter au moins un tenon externe et/ou au moins une protubérance inférieure pour commander le fonctionnement du moteur 2 lorsque le couvercle externe 7 coiffe le récipient de travail 4.

A titre de variante, le couvercle externe 7 n'est pas nécessairement déplacé selon une direction présentant uniquement une composante verticale contre au moins un élément de rappel élastique 8 pour atteindre la position de commande. Le couvercle externe 7 peut par exemple comporter une partie venant en appui sur le boîtier 1 et une autre partie supportée par ledit élément de rappel élastique 8, déplacée vers le boîtier 1 pour actionner un interrupteur 11 commandant la mise en marche du moteur 2.

A titre de variante, le couvercle externe 7 n'est pas nécessairement verrouillé par rotation sur le boîtier 1 avant d'être déplacé vers le boîtier 1 pour actionner un interrupteur 11 commandant la mise en marche du moteur 2.

La présente invention n'est nullement limitée à l'exemple de réalisation décrit et à ses variantes, mais englobe de nombreuses modifications dans le cadre des revendications.

## Revendications

1. Appareil électroménager pour réaliser des préparations alimentaires et/ou cosmétiques, comportant un boîtier (1) supportant un récipient de travail (4) recevant un outil de travail rotatif (5), ainsi qu'un couvercle interne (6) d'étanchéité amovible disposé sur le récipient de travail (4) et un couvercle externe (7) amovible monté sur le boîtier (1), le boîtier (1) renfermant un moteur (2) pour l'entraînement de l'outil de travail rotatif (5), le couvercle externe (7) étant mobile sur le boîtier (1) contre au moins un élément de rappel élastique (8) entre une position de repos relevée dans laquelle le moteur (2) est à l'arrêt et une position de commande abaissée dans laquelle le moteur (2) est en fonctionnement, **caractérisé en ce que** le couvercle externe (7) déplacé vers le boîtier (1) presse le couvercle interne (6) contre le récipient de travail (4) à partir d'une position d'étanchéité intermédiaire entre la position de repos relevée et la position de commande abaissée, dans laquelle le moteur (2) n'est pas encore en fonctionnement.

2. Appareil électroménager pour réaliser des préparations alimentaires et/ou cosmétiques selon la revendication 1, **caractérisé en ce que** le couvercle interne (6) repose sur une paroi interne supérieure évasée (41) du récipient de travail (4) au moins lorsque le couvercle externe (7) presse le couvercle interne (6) contre le récipient de travail (4).

3. Appareil électroménager pour réaliser des préparations alimentaires et/ou cosmétiques selon l'une des revendications 1 ou 2, **caractérisé en ce que** le couvercle interne (6) comprend un joint annulaire d'étanchéité (61) prenant appui contre le récipient de travail (4).

4. Appareil électroménager pour réaliser des préparations alimentaires et/ou cosmétiques selon la revendication 3, **caractérisé en ce que** le joint annulaire d'étanchéité (61) est un joint à lèvre.

5. Appareil électroménager pour réaliser des préparations alimentaires et/ou cosmétiques selon l'une des revendications 1 à 4, **caractérisé en ce qu'**un élément déformable (70) est interposé entre le couvercle externe (7) et le couvercle interne (6).

6. Appareil électroménager pour réaliser des préparations alimentaires et/ou cosmétiques selon la revendication 5, **caractérisé en ce que** l'élément déformable (70) est agencé en position centrale.

7. Appareil électroménager pour réaliser des préparations alimentaires et/ou cosmétiques selon l'une des revendications 5 ou 6, **caractérisé en ce que** l'élément déformable (70) est réalisé en élastomère.

8. Appareil électroménager pour réaliser des préparations alimentaires et/ou cosmétiques selon l'une des revendications 5 à 7, **caractérisé en ce que** l'élément déformable (70) est monté sur le couvercle interne (6).

9. Appareil électroménager pour réaliser des préparations alimentaires et/ou cosmétiques selon la revendication 8, **caractérisé en ce que** l'élément déformable (70) forme un organe de préhension 72 pour le couvercle interne (6).

10. Appareil électroménager pour réaliser des préparations alimentaires et/ou cosmétiques selon l'une des revendications 8 ou 9, **caractérisé en ce que** l'élément déformable (70) est solidaire d'un élément intermédiaire 64 assemblé de manière démontable avec le couvercle interne (6).

11. Appareil électroménager pour réaliser des préparations alimentaires et/ou cosmétiques selon la revendication 10, **caractérisé en ce que** le couvercle interne (6) présente au moins une perforation primaire (66).

12. Appareil électroménager pour réaliser des préparations alimentaires et/ou cosmétiques selon la revendication 11, **caractérisé en ce que** l'élément déformable (70) présente au moins une perforation secondaire (73) reliée à la ou au moins l'une des perforations primaires (66) par un conduit (67) ménagé dans l'élément intermédiaire (64).

13. Appareil électroménager pour réaliser des préparations alimentaires et/ou cosmétiques selon l'une des revendications 1 à 12, **caractérisé en ce que** le couvercle externe (7) comporte au moins un tenon interne (20) pour commander le fonctionnement du moteur (2) lorsque le couvercle externe (7) coiffe le récipient de travail (4),

14. Appareil électroménager pour réaliser des préparations alimentaires et/ou cosmétiques selon la revendication 13, **caractérisé en ce que** le couvercle externe (7) présente au moins trois tenons internes (20), et de préférence trois tenons internes (20).

15. Appareil électroménager pour réaliser des préparations alimentaires et/ou cosmétiques selon l'une des revendications 1 à 14, **caractérisé en ce que** le couvercle externe (7) en position de repos repose sur une couronne (10) agencée dans le boîtier (1), **en ce que** la couronne (10) est montée mobile contre ledit élément de rappel élastique (8), et **en ce qu'**une pression verticale exercée manuellement sur le couvercle externe (7) déplace la couronne (10) pour actionner un interrupteur (11) et commander la mise en marche du moteur (2).

## Patentansprüche

1. Elektrohaushaltsgerät zum Herstellen von Lebensmittel- und / oder Kosmetikzubereitungen, aufweisend ein Gehäuse (1), das einen Arbeitsbehälter (4) trägt, der ein drehbares Arbeitswerkzeug (5) aufnimmt, sowie eine innere Abdeckung (6) zur Dichtung, die abnehmbar auf dem Arbeitsbehälter (4) angebracht ist, und eine äußere Abdeckung (7), die abnehmbar auf dem Gehäuse (1) angebracht ist, wobei das Gehäuse (1) einen Motor (2) für das Antreiben des drehbaren Arbeitswerkzeugs (5) umschließt, wobei die äußere Abdeckung (7) auf dem Gehäuse (1) gegen zumindest ein elastisches Rückstellelement (8) zwischen einer angehobenen Ruheposition, in der der Motor (2) außer Betrieb ist, und eine abgesenkten Steuerposition , in der der Motor (2) in Betrieb ist, beweglich ist, **dadurch gekennzeichnet, dass** die äußere Abdeckung (7), die in Richtung des Gehäuses (1) verschoben ist, die innere Abdeckung (6) gegen den Arbeitsbehälter (4) ausgehend von einer Dichtungsposition drückt, die zwischen der angehobenen Ruheposition und der abgesenkten Steuerposition ist und in der der Motor (2) noch nicht in Betrieb ist.

2. Elektrohaushaltsgerät zum Herstellen von Lebensmittel- und / oder Kosmetikzubereitungen nach Anspruch 1, **dadurch gekennzeichnet, dass** die innere Abdeckung (6) auf einer aufgeweiteten oberen Innenwand (41) des Arbeitsbehälters (4) zumindest dann aufliegt, wenn die äußere Abdeckung (7) die innere Abdeckung (6) gegen den Arbeitsbehälter (4) drückt.

3. Elektrohaushaltsgerät zum Herstellen von Lebensmittel- und / oder Kosmetikzubereitungen nach einem der Ansprüche 1 oder 2, **dadurch gekennzeichnet, dass** die innere Abdeckung (6) eine ringförmige Dichtung (61) aufweist, die an dem Arbeitsbehälter (4) anliegt.

4. Elektrohaushaltsgerät zum Herstellen von Lebensmittel- und / oder Kosmetikzubereitungen nach Anspruch 3, **dadurch gekennzeichnet, dass** die ringförmige Dichtung (61) eine Lippendichtung ist.

5. Elektrohaushaltsgerät zum Herstellen von Lebensmittel- und / oder Kosmetikzubereitungen nach einem der Ansprüche 1 bis 4, **dadurch gekennzeichnet, dass** ein verformbares Element (70) zwischen der äußeren Abdeckung (7) und der inneren Abdeckung (6) angeordnet ist.

6. Elektrohaushaltsgerät zum Herstellen von Lebensmittel- und / oder Kosmetikzubereitungen nach Anspruch 5, **dadurch gekennzeichnet, dass** das verformbare Element (70) in einer zentralen Position angeordnet ist.

7. Elektrohaushaltsgerät zum Herstellen von Lebensmittel- und / oder Kosmetikzubereitungen nach einem der Ansprüche 5 oder 6, **dadurch gekennzeichnet, dass** das verformbare Element (70) aus Elastomer hergestellt ist.

8. Elektrohaushaltsgerät zum Herstellen von Lebensmittel- und / oder Kosmetikzubereitungen nach einem der Ansprüche 5 bis 7, **dadurch gekennzeichnet, dass** das verformbare Element (70) auf der inneren Abdeckung (6) angebracht ist.

9. Elektrohaushaltsgerät zum Herstellen von Lebensmittel- und / oder Kosmetikzubereitungen nach Anspruch 8, **dadurch gekennzeichnet, dass** das verformbare Element (70) ein Greifelement 72 für die innere Abdeckung (6) bildet.

10. Elektrohaushaltsgerät zum Herstellen von Lebensmittel- und / oder Kosmetikzubereitungen nach einem der Ansprüche 8 oder 9, **dadurch gekennzeichnet, dass** das verformbare Element (70) an einem Zwischenteil 64 befestigt ist, das auf lösbare Weise an der inneren Abdeckung (6) angebracht ist.

11. Elektrohaushaltsgerät zum Herstellen von Lebensmittel- und / oder Kosmetikzubereitungen nach Anspruch 10, **dadurch gekennzeichnet, dass** die innere Abdeckung (6) zumindest eine primäre Perforation (66) aufweist.

12. Elektrohaushaltsgerät zum Herstellen von Lebensmittel- und / oder Kosmetikzubereitungen nach Anspruch 11, **dadurch gekennzeichnet, dass** das verformbare Element (70) zumindest eine sekundäre Perforation (73) aufweist, die mit der oder zumindest einer der primären Perforationen (66) durch eine Leitung (67) verbunden ist, die in dem Zwischenelement (64) ausgebildet ist.

13. Elektrohaushaltsgerät zum Herstellen von Lebensmittel- und / oder Kosmetikzubereitungen nach einem der Ansprüche 1 bis 12, **dadurch gekennzeichnet, dass** die äußere Abdeckung (7) zumindest einen inneren Zapfen (20) zum Steuern des Betriebes des Motors (2) aufweist, wenn die äußere Abdeckung (7) den Arbeitsbehälter (4) abdeckt.

14. Elektrohaushaltsgerät zum Herstellen von Lebensmittel- und / oder Kosmetikzubereitungen nach Anspruch 13, **dadurch gekennzeichnet, dass** die äußere Abdeckung (7) zumindest drei innere Zapfen (20) und vorzugsweise drei innere Zapfen (20) aufweist.

15. Elektrohaushaltsgerät zum Herstellen von Lebensmittel- und / oder Kosmetikzubereitungen nach einem der Ansprüche 1 bis 14, **dadurch gekennzeichnet, dass** die äußere Abdeckung (7) in der Ruheposition auf einem Ring (10) aufliegt, der in dem Gehäuse (1) angeordnet ist, dass der Ring (10) gegen das elastische Rückstellelement (8) beweglich angebracht ist, und dass ein vertikaler Druck, der manuell auf die äußere Abdeckung (7) ausgeübt wird, den Ring (10) zum Betätigen eines Schalters (11) und Steuern des Einschaltens des Motors (2) verschiebt.

## Claims

1. Household electrical appliance for making food and/or cosmetic preparations, comprising a housing (1) supporting a working container (4) receiving a rotating working tool (5), as well as a removable inner sealing lid (6) positioned on the working container (4) and a removable outer lid (7) mounted on the housing (1), the housing (1) enclosing a motor (2) for driving the rotating working tool (5), the outer lid (7) being such that it can move on the housing (1) against at least one elastic return element (8) between a raised rest position in which the motor (2) is off and a lowered control position in which the motor (2) is running, **characterised in that** the outer lid (7) moved towards the housing (1) presses the inner lid (6) against the working container (4) from an intermediate sealing position between the raised rest position and the lowered control position, in which the motor (2) is not yet running.

2. Household electrical appliance for making food and/or cosmetic preparations according to claim 1, **characterised in that** the inner lid (6) rests against a flared upper inner wall (41) of the working container (4) at least when the outer lid (7) is pressing the inner lid (6) against the working container (4).

3. Household electrical appliance for making food and/or cosmetic preparations according to either claim 1 or 2, **characterised in that** the inner lid (6) comprises an annular seal (61) bearing against the working container (4).

4. Household electrical appliance for making food and/or cosmetic preparations according to claim 3, **characterised in that** the annular seal (61) is a lip seal.

5. Household electrical appliance for making food and/or cosmetic preparations according to one of claims 1 to 4, **characterised in that** a deformable element (70) is inserted between the outer lid (7) and the inner lid (6).

6. Household electrical appliance for making food and/or cosmetic preparations according to claim 5, **characterised in that** the deformable element (70) is arranged in a central position.

7. Household electrical appliance for making food and/or cosmetic preparations according to either claim 5 or 6, **characterised in that** the deformable element (70) is made of an elastomer.

8. Household electrical appliance for making food and/or cosmetic preparations according to one of claims 5 to 7, **characterised in that** the deformable element (70) is mounted on the inner lid (6).

9. Household electrical appliance for making food and/or cosmetic preparations according to claim 8, **characterised in that** the deformable element (70) forms a gripping member 72 for gripping the inner lid (6).

10. Household electrical appliance for making food and/or cosmetic preparations according to either claim 8 or 9, **characterised in that** the deformable element (70) is rigidly connected to an intermediate element 64 assembled in a removable manner with the inner lid (6).

11. Household electrical appliance for making food and/or cosmetic preparations according to claim 10, **characterised in that** the inner lid (6) has at least one primary perforation (66).

12. Household electrical appliance for making food and/or cosmetic preparations according to claim 11, **characterised in that** the deformable element (70) has at least one secondary perforation (73) connected to the one or at least one of the primary perforations (66) via a duct (67) fitted inside the intermediate element (64).

13. Household electrical appliance for making food and/or cosmetic preparations according to one of claims 1 to 12, **characterised in that** the outer lid (7) comprises at least one inner lug (20) for controlling the operation of the motor (2) when the outer lid (7) is covering the working container (4).

14. Household electrical appliance for making food and/or cosmetic preparations according to claim 13, **characterised in that** the outer lid (7) has at least three inner lugs (20), and preferably has three inner lugs (20).

15. Household electrical appliance for making food and/or cosmetic preparations according to one of claims 1 to 14, **characterised in that** the outer lid (7) in the rest position is at rest on a ring (10) arranged in the housing (1), **in that** the ring (10) is mounted such that it can move against said elastic return element (8), and **in that** a vertical pressure manually exerted on the outer lid (7) moves the ring (10) to actuate a switch (11) and trigger the start-up of the motor (2).
